# EUROPÄISCHE PATENTSCHRIFT

(11) **EP 1 418 349 B1**
(45) Veröffentlichungstag und Bekanntmachung des Hinweises auf die Patenterteilung: **08.03.2006**
(21) Anmeldenummer: 03024861.1
(22) Anmeldetag: 31.10.2003
(51) Int. Cl.: F16C 11/06

(54) **Schnapp-Kugelzapfen**
Snapped spherical gudgeon
Pivot sphérique enclenchable

(30) Priorität: 05.11.2002 DE 10251784
(43) Veröffentlichungstag der Anmeldung: 12.05.2004
(73) Patentinhaber: ZF Lemförder Metallwaren AG, 49448 Lemförde (DE)
(72) Erfinder: Budde, Frank, 49401 Damme (DE); Schönhoff, Stefan, 49082 Osnabrück (DE)

(56) Entgegenhaltungen:
- EP-A- 0 024 442
- EP-A- 0 768 066
- DE-B- 1 105 292
- DE-U- 1 708 040
- US-A- 4 312 079

## Beschreibung

Die vorliegende Erfindung betrifft einen zweiteiligen Kugelzapfen für ein Kugelgelenk sowie ein Verfahren zum Herstellen eines solchen Kugelzapfens,

Ein Kugelgelenk besteht im Allgemeinen aus einem Gelenkgehäuse; einem Kugelzapfen, einer Gleitschale, in der der Kugelkopf des Kugelzapfens gleitet und einem Verschlussmechanismus, der ein Ausknüpfen des Kugelzapfens aus dem Gelenkgehäuse verhindert. Die resultierenden Kipp- und Drehmomente des Systems werden durch die Paarung der Gleitpartner beeinflusst.

Für hochbelastbare Kugelgelenke werden meist einteilige Kugelzapfen aus Stahl verwendet, bei denen der Kugelkopf an den Kugelzapfenhals angeformt ist. Es kann jedoch von Vorteil sein, Kugelkopf und Kugelzapfenhals aus unterschiedlichen Materialien und/oder in getrennten Arbeitsgängen herzustellen, was eine zweiteilige Ausführung des Kugelzapfens favorisiert.

Es sind verschiedene Ausführungen von zweiteiligen Kugelzapfen sowie Verfahren zur ihrer Herstellung bekannt. So offenbart die DE 44 03 584 C2 einen zweiteiligen metallischen Kugelzapfen für ein hochbelastbares Kugelgelenk für Kraftfahrzeuge, bei dem unterschiedliche Korrosionsschutzanforderungen an Kugelkopf und Kugelzapfenhals bestehen. Bei der Herstellung dieses Kugelzapfens wird der mit einer profilierten Durchgangsöffnung versehene Kugelkopf auf den Kugelzapfenhals drehfest aufgesteckt und mit einem Bördelrand auf dem Kugelzapfenhals fixiert.

Die EP 0 186 856 A1 offenbart ein Herstellungsverfahren für einen zweiteiligen metallischen Kugelzapfen, bei dem ein kolbenförmiger Kugelzapfenhals mit einer glatten Oberfläche mittels einer speziellen Pressvorrichtung in mit einer profilierten Öffnung versehenen Kugelkopf eingepresst wird.

Wird ein Kugelzapfen mit einem Künststöffkugelkopf ausgeführt, kann das Gewicht des Kugelzapfens reduziert und unter Umständen auf eine Gleitschale im Kugelgelenk verzichtet werden; was die Herstellung des Kugelgelenks vereinfachen kann.

Ein Kugelzapfen für ein Pendelgelenk mit einem Kunststoffkugelkopf ist aus der DE 34 40 044 A1 bekannt. Die Verbindung zwischen Kugelzapfenhals und Kunststoffkugelkopf erfolgt hier über eine Zwischenhülse, die einerseits auf den Kugelzapfenhals aufgerastet und andererseits durch ihre asymmetrische Nasenform fest und drehsicher im Kunststoffkugelkopf eingebettet ist.

Die DE 18 18 602 U1 schlägt ferner vor, den Kunststoffkugelkopf direkt auf ein verdicktes Ende des Kugelzapfenhalses aufzugießen oder den Kugelzapfenhals unter Spannung in einer mit einer komplementär zu dem verdickten Ende des Kugelzapfenhalses vorgeformten Höhlung des Kunststoffkugelkopfes einzusetzen.

Bei den beschrieben zweiteiligen Kugelzapfen werden für die Herstellung der Verbindung zwischen Kugelkopf und Kugelzapfenhals spezielle Werkzeuge oder Maschinen benötigt. Darüber hinaus ist ein Zusammenfügen eines Kugelzapfenhalses mit einem bereits im Kugelgelenkgehäuse gelagerten Kugelkopf mit den beschriebenen Verfahren nicht möglich.

Es ist daher Aufgabe der vorliegenden Erfindung einen zweiteiligen Kugelzapfen für ein Gelenk sowie ein Verfahren zur Herstellung eines solchen Kugelzapfens zu schaffen, bei denen Kugelzapfenhals und Kugelkopf eine feste und dennoch leicht herzustellende Verbindung eingehen. Insbesondere soll ein Zusammenfügen von Kugelzapfenhals und Kugelkopf, bei dem der Kugelkopf bereits im Kugelgelenkgehäuse gelagert ist, möglich sein.

Diese Aufgabe wird durch die Merkmale der unabhängigen Ansprüche gelöst. Vorteilhafte Weiterbildungen der Erfindung ergeben sich aus den abhängigen Ansprüchen.

Somit weist der erfindungsgemäße Kugelzapfen einen Kugelzapfenhals und einen auf den Kugelzapfenhals aufgebrachten Kugelkopf auf, wobei ein Sägezahnprofil in axialer Richtung des Kugelzapfenhalses in der Höhlung des Kugelkopfes und/oder an dem Kugelzapfenhals aufgeformt ist, mittels dessen der Kugelkopf mit dem Kugelzapfenhals verrastet. Der Kugelkopf wird durch das Eingreifen der Zähne des Kugelzapfenhalses und/oder des Kugelkopfes in den Kugelkopf beziehungsweise den Kugelzapfenhals fixiert.

Das Sägezahnprofil des Kugelzapfenhalses beziehungsweise des Kugelkopfes ist dabei so geformt, dass der Kugelkopf leicht auf den Kugelzapfenhals aufgeschoben werden kann und ein Ausgleiten beziehungsweise Ausreißen des Kugelzapfenhalses aus dem Kugelkopf erschwert beziehungsweise unmöglich wird. Nach dem Zusammenfügen gehen, ohne dass weitere Bauteile benötigt werden, Kugelkopf und Kugelzapfenhals eine feste, nichtlösbare Verbindung ein. Eine Montage des erfindungsgemäßen Kugelzapfens ist auch mit einem bereits in einem verschlossenen Gelenkgehäuses gelagerten Kugelkopf möglich. Der Produktionsablauf wird vereinfacht, die Herstellungskosten können reduziert werden.

Bei der Verwendung eines Kunststoffkugelkopfes sind die gleichen Reibpaarungen wie bei einem Kugelgelenk mit separater Kugelschale erzielbar, wobei auf das bekannte tribologische Know How zurückgegriffen werden kann.

Eine am Kugelzapfenhals zusätzlich angeformte Nase oder Nut gibt Führung beim Aufstecken des Kugelkopfes auf den Kugelzapfenhals und verhindert das Verdrehen des Kunststoffkugelkopfes auf dem Kugelzapfenhals bei einer späteren Drehbeanspruchungen des Kugelzapfens im Gelenk.

Gemäß dem erfindungsgemäßen Verfahren können Kugelzapfenhälse und Kugelköpfe von unterschiedlicher Größe und aus unterschiedlichen Materialien miteinander kombiniert werden (Baukastensystem). Sind Kugelkopf und Kugelzapfenhals aus ähnlich harten Werkstoffen, ist es für ein leichtes Aufrasten des Kugelkopfes auf den Kugelzapfenhals vorteilhaft, beide mit einem Sägezahnprofil zu versehen, wobei das Sägezahnprofil in der Höhlung des Kugelkopfes komplementär zu dem Sägezahnprofil des Kugelzapfenhalses geformt wird. Eine Verformung einer Nut oder Nase als Führung und Verdrehsicherung in der Höhlung des Kunststoffkugelkopfes komplementär zum Kugelzapfenhals ist ebenfalls vorteilhaft.

Die Lebensdauer eines Kugelgelenkes kann durch Aufbringen von Gleitmittel auf die Gleitflächen des Kugelgelenkes, welches neben der Verringerung der Reibung eine Abdichtfunktion hat, erhöht werden. Hierzu weist der Kugelkopf gemäß der Erfindung eine Durchgangsöffnung auf; an deren einem Ende der Kugelzapfenhals nur teilweise in den Kugelkopf hineinreicht. Der verbleibende Raum zwischen dem Kugelzapfenhals und dem anderen Ende der Durchgangsöffnung ist mit Gleitmittel gefüllt und dient als Gleitmittel-Reservoirs. Somit kann, wenn der Kugelzapfen im Gelenkgehäuse gelagert ist, an der der Gleitfläche des Gelenkgehäuses zugewandten Durchgangsöffnung des Kugelkopfes Gleitmittel austreten.

Die vorliegende Erfindung wird in der folgenden Beschreibung anhand der beigefügten Figuren näher erläutert, in denen zeigen:
- Figur 1a und 1b: ein Beispiel des erfindungsgemäßen Verfahrens bei dem der Kugelzapfenhals aus einem härteren Werkstoff besteht als der Kugelkopf,
- Figur 2a und 2b: ein Beispiel des erfindungsgemäßen Verfahrens bei dem Kugelkopf und Kugelzapfenhals aus gleichharten Werkstoffen bestehen.
- Figur 3a und 3b: ein Beispiel des erfindungsgemäßen Verfahrens bei dem der Kugelkopf aus einem härteren Werkstoff besteht als der Kugelzapfenhals,
- Figur 4: ein Beispiel des erfindungsgemäßen Kugelzapfens mit einem Schmiermittelreservoir, und
- Figur 5: ein Beispiel des erfindungsgemäßen Kugelzapfens mit einer Verdrehsicherung.

Gemäß der vorliegenden Erfindung besteht der Kugelzapfen aus zwei Teilen, dem Kugelzapfenhals und dem Kugelkopf. Dies ermöglicht eine getrennte Herstellung beziehungsweise Bearbeitung der beiden Teile und den Aufbau eines Baukastensystems, in dem Kugelzapfenhälse und Kugelköpfe mit unterschiedlichen Größen und Materialien miteinander kombiniert werden können,

In der in Figur 1a gezeigten Ausführungsform des erfindungsgemäßen Kugelzapfens besteht der Kugelzapfenhals 1, an dessen einem Ende ein Gewinde 4 zur Anbindung an z.B. ein Gestänge eines Fahrzeuges und an dessen anderen ein rotationssymmetrisches Sägezahnprofil 3a aufgeformt ist, aus Metall. Der Kugelkopf 2 ist aus Kunststoff geformt und mit einer Bohrung 3b versehen, deren Durchmesser kleiner als der größte Durchmesser des Kugelzapfenhalses 1 im Bereich des Sägezahnprofils 3a ist. Die Verwendung eines Kunststoffkugelkopfes 2 ist besonders vorteilhaft, da auf eine Gleitschicht beziehungsweise Gleitschale, welche mit einem zusätzlichen Montageschritt in das Gelenk eingebracht werden muss, verzichtet werden kann.

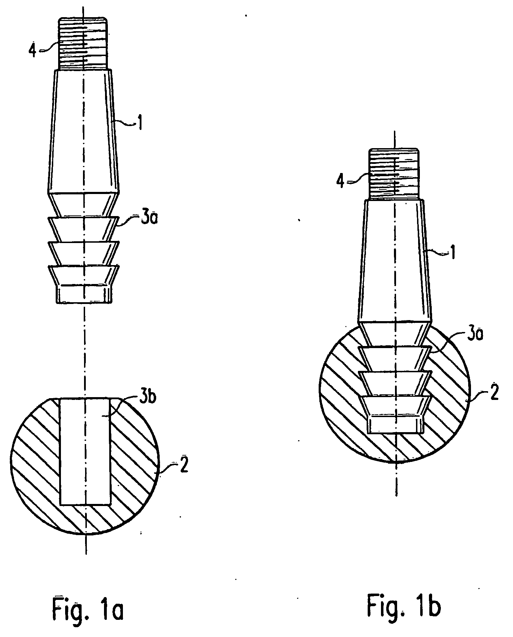

Der Kugelzapfenhals 1 wird, wie in Figur 1b gezeigt, in die Bohrung 3b des Kugelkopfes 2 eingepresst. Die Zähne des härteren metallischen Kugelzapfenhalses 1 greifen in den Kunststoffkugelkopf 2, worauf sich der Kunststoffkugelkopf 2 mit dem Kugelzapfenhals 1 zu einem festen, nichtlösbaren Verbund verbindet. Zur Steigerung der Festigkeit der Verbindung, insbesondere zum Schutz vor Verdrehung des Kugelzapfenhalses 1 im Kunststoffkugelkopf 2, kann am Kugelzapfenhals 1 eine Nase (nicht gezeigt) ausgebildet sein, die beim Einpressen ebenfalls in die Bohrung 3b des Kunststoffkugelkopfes 2 eingreift. Entsprechend der verwendeten Werkstoffe, kann das Eingreifen der Zähne auch durch Erwärmen des Kugelzapfenhalses 1 und/oder des Kugelkopfes 2 unterstützt werden.

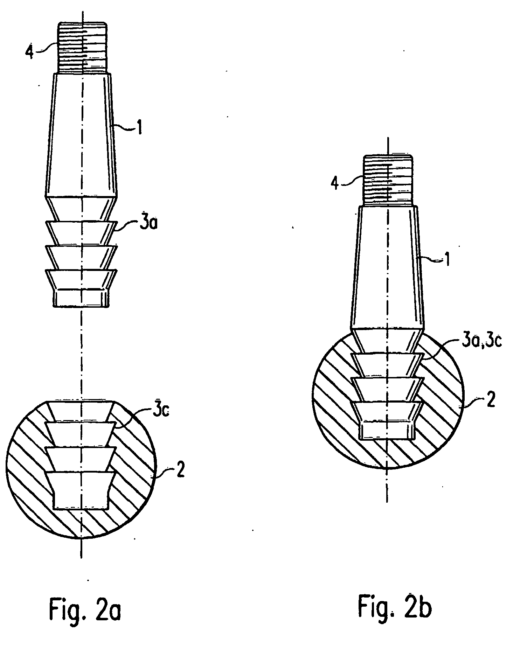

In der in Figur 2a gezeigten Ausführungsform des erfindungsgemäßen Kugelzapfens bestehen Kugelzapfenhals 1 und Kugelkopf 2 aus ähnlich harten Werkstoffen. In der Höhlung des Kugelkopfes 2 ist ein komplementär zum Kugelzapfenhals 1 geformtes Sägezahnprofil 3c ausgeformt, so dass der Kugelkopf 2, wie in Figur 2b gezeigt, auf den Kugelzapfenhals 1 aufrasten kann. Zur zusätzlichen Steigerung der Festigkeit der Verbindung können die Kontaktflächen miteinander verklebt oder verschweißt werden.

Mit einer in axialer Richtung auf dem Kugelzapfenhals 1 oder in der Höhlung des Kunststöffkugelkopfes 2 aufgeformten Nase und einer entsprechenden Nut am Kunststoffkugelkopf 2 beziehungsweise am Kugelzapfenhals 1, in die die Nase 6 greift (nicht gezeigt), wird ebenfalls ein zusätzlicher Schutz gegen Verdrehung des Kugelzapfenhalses 1 im Kugelkopf 2 erreicht.

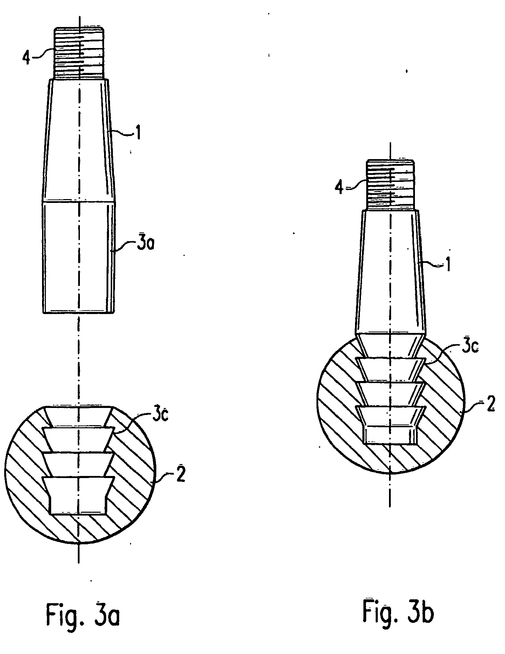

In der in Figur 3a gezeigten Ausführungsform besteht der Kugelkopf 2 aus einem härteren Werkstoff als der Kugelzapfenhals 1. Ähnlich der Figur 1b greifen hier beim Zusammenfügen, wie in Figur 3b gezeigt, die Zähne des Sägezahnprofils 3c in den Kugelzapfenhals 1, worauf sich der Kugelkopf 2 mit dem Kugelzapfenhals 1 zu einem festen, nichtlösbaren Verbund verbindet. Eine Verdrehsicherung (nicht gezeigt) wird analog zu der in Figur 1 beschriebenen Ausführung am härteren Kugelkopf 2 angeformt.

Bei vielen Anwendungsfällen für Kugelgelenke treten die größten Belastungen im Äquatorialbereich der Kugelflächen auf. Die Lebensdauer von Gelenken kann hierbei durch das Bereitstellen eines Gleitmittel-Reservoirs im Bereich der Gelenkfläthen erhöht werden.

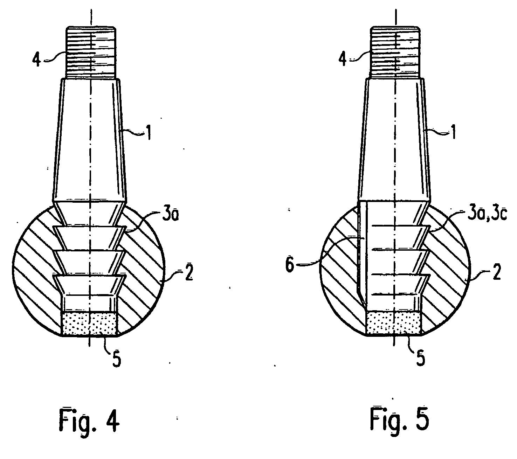

In dem in Figur 4 gezeigten Ausführungsbeispiel der Erfindung weist der Kugelkopf 2 eine Durchgangsöffnung auf, an deren einem Ende der Kugelzapfen 1, zum Beispiel gemäß einem der in den Figur 1 bis 3 beschriebenen Verfahren, in den Kugelkopf 2 eingeführt ist. Dabei füllt der Kugelzapfenhals 1 den Kugelkopf 2 nicht vollständig aus, so dass an der dem Kugelgelenkgehäuses zugewandten Durchgangsöffnung des Kugelkopfes 2 ein Raum 5 entsteht, der mit Gleitmittel gefüllt wird. Das Gleitmittel wird vor dem Einfügen des Kugelzapfens in das Gelenkgehäuse in den Raum 5 des Kugelkopfes 2 eingefüllt, der es dann bei Bewegungen im Gelenkgehäuse an die Gleitflächen abgibt. Es ist jedoch auch möglich, soviel Gleitmittel in die Höhlung des Kugelkopfes 2 einzufüllen, dass Gleitmittel beim Einführen des Kugelzapfenhalses 1 in den Kugelkopf 2 aus der anderen Durchgangsöffnung des Kugelkopfes 2 heraustritt. Diese Vorgehensweise ist besonders vorteilhaft, wenn beim Zusammenfügen von Kugelkopf 2 und Kugelzapfenhals 1 der Kugelkopf 2 bereits in dem Gelenkgehäuse gelagert und der Kugelzapfenhals 1 nicht oder noch nicht vollständig in den Kugelkopf 2 eingeführt ist, da beim Einführen des Kugelzapfenhalses 1 in den Kugelkopf 2 automatisch das Gleitmittel an die Gleitflächen des Gelenkes gedrückt wird.

In den bisher beschriebenen Beispielen war das Sägezahnprofil 3a, 3c an dem Kugelzapfenhals 1 und/oder dem Kugelkopf 2 rotationssymmetrisch ausgebildet. Figur 5 zeigt ein Ausführungsbeispiel gemäß der Erfindung, bei dem das Sägezahnprofil 3a, 3c des Kugelzapfenhalses 1 beziehungsweise des Kugelkopfes 2 lediglich an einer Seite und somit nicht rotationssymmetrisch ausgebildet ist. Diese Ausführung weist einen guten Schutz vor Verdrehung des Kugelzapfenhalses 1 im Kugelkopf 2 auf. Eine auf der anderen Seite ausgebildete Nut-Nase-Paarung 6 gibt eine Führung beim Zusammenfügen beziehungsweise beim Aufrasten von Kugelkopf 2 auf den Kugelzapfenhals 1 und zusätzlichen Schutz vor Verdrehung.

### Bezugszeichenliste

- 1: Kugelzapfenhals
- 2: Kugelkopf
- 3a: Sägezahnprofil am Kugelzapfenhals
- 3b: Bohrung im Kugelkopf
- 3c: Sägezahnpröfil am Kugelkopf
- 4: Gewinde am Kugelzapfenhals
- 5: Mit Gleitmittel gefüllter Raum im Kugelkopf
- 6: Nut-Nase-Paarung

## Patentansprüche

1. Zweiteiliger Kugelzapfen für ein Gelenk mit einem Kugelzapfenhals (1) und einem auf den Kugelzapfenhals (1) aufgebrachten Kugelkopf (2),
**dadurch gekennzeichnet, dass** ein Sägezahnprofil (3a, 3c) in axialer Richtung (2) des Kugelzapfenhalses (1) in einer Höhlung des Kugelkopfes (2) und/oder an dem Kugelzapfenhals (1) aufgeformt ist, mittels dessen der Kugelkopf (2) mit dem Kugelzapfenhals (1) verrastet ist.

2. Kugelzapfen nach Anspruch 1, **dadurch gekennzeichnet, dass** auf dem Kugelzapfenhals (1) oder in der Höhlung des Kugelkopfes (2) eine Nase (6) als Verdrehsicherung vorhanden ist.

3. Kugelzapfen nach Anspruch 1 oder 2, **dadurch gekennzeichnet, dass** der Kugelkopf (2) in seiner Höhlung ein komplementär zum Kugelzapfenhals (1) geformtes Sägezahnprofil (3a, 3c) aufweist, auf das der Kugelzapfenhals (1) aufgeschnappt ist.

4. Kugelzapfen nach Anspruch 3, **dadurch gekennzeichnet, dass** der Kugelzapfenhals (1) oder der Kugelkopf (2) als Verdrehsicherung eine Nase (6) in axialer Richtung und der Kugelkopf (2) beziehungsweise der Kugelzapfenhals (1) eine Nut, in welche die Nase (6) greift, aufweisen.

5. Kugelzapfen nach einem der Ansprüche 1 bis 4, **dadurch gekennzeichnet, dass** der Kugelkopf (2) eine Durchgangsöffnung aufweist, an deren einem Ende der Kugelzapfenlials (1) in den Kugelkopf (2) hineinreiclit, wobei der Raum (5) zwischen dem Kugelzäpfenhals (1) und dem anderen Ende einer Durchgangsöffnung im Kugelkopf (2) Gleitmittel enthält.

6. Verfahren zum Herstellen eines Kugelzapfens für ein Gelenk **dadurch gekennzeichnet, dass** auf einen Kugelzapfenhals (1) ein Kugelkopf (2) aufgeschoben wird, wobei ein Sägezahnprofil (3a, 3c) in axialer Richtung (2) des Kugelzapfenhalses (1) in der Höhlung des Kugelkopfes (2) und/oder an dem Kugelzapfenhals (1) vorhanden ist, mittels dessen der Kugelkopf (2) mit dem ICugelzäpfenhals (1) verrastet.

7. Verfahren zum Herstellen eines Kugelzapfens nach Anspruch 6, **dadurch gekennzeichnet, dass** der Kugelkopf (2) während des Aufschiebens auf den Kugelzapfenhals (1) in einem Gelenkgehäuse eines Kugelgelenkes gelagert ist.

8. Verfahren zum Herstellen eines Kugelzapfens nach Anspruch 6 oder 7, **dadurch gekennzeichnet, dass** der Kugelzapfenhals (1) beim Einschieben in eine Durchgangsöffnung des Kugelkopfes (2) am anderen Ende der Durchgangsöffnung Gleitmittel (5), das sich im Inneren des Kunststoffkugelkopfes (2) befindet, am anderen Ende der Durchgangsöffnung herausdrückt.

## Claims

1. A two-part ball-ended pin for a joint, having a ball-ended pin shaft (1) and a ball-shaped head (2) mounted on the ball-ended pin shaft (1),
**characterised in that** a sawtooth-shaped profile (3a, 3c) is made in the axial direction (2) of the ball-ended pin shaft (1) in a cavity in the ball-shaped head (2) and/or on the ball-ended pin shaft (1), the ball-shaped head (2) being latched to the ball-ended pin shaft (1) by means of this sawtooth-shaped profile (3a, 3c).

2. A ball-ended pin according to Claim 1, **characterised in that** a lug (6) is provided on the ball-ended pin shaft (1) or in the cavity in the ball-shaped head (2), as a means of preventing rotation.

3. A ball-ended pin according to Claim 1 or 2, **characterised in that** the ball-shaped head (2) has in its cavity a sawtooth-shaped profile (3a, 3c) shaped to make it complementary with the ball-ended pin shaft (1), the ball-ended pin shaft (1) being snap-fitted onto this sawtooth-shaped profile (3a, 3c).

4. A ball-ended pin according to Claim 3, **characterised in that** the ball-ended pin shaft (1) or the ball-shaped head (2) has, as a means of preventing rotation, a lug (6) formed in the axial direction, and the ball-shaped head (2) or the ball-ended pin shaft (1) has a groove in which the lug (6) engages.

5. A ball-ended pin according to one of Claims 1 to 4, **characterised in that** the ball-shaped head (2) has a through opening at the one end whereof the ball-ended pin shaft (1) reaches into the ball-shaped head (2), with the space (5) between the ball-ended pin shaft (1) and the other end of a through opening in the ball-shaped head (2) containing lubricant.

6. A process for making a ball-ended pin for a joint, **characterised in that** a ball-shaped head (2) is pushed onto a ball-ended pin shaft (1), a sawtooth-shaped profile (3a, 3c) being provided in the axial direction (2) of the ball-ended pin shaft (1) in the cavity in the ball-shaped head (2) and/or on the ball-ended pin shaft (1), and the ball-shaped head (2) being latched to the ball-ended pin shaft (1) by means of this sawtooth-shaped profile (3a, 3c).

7. A process for making a ball-ended pin according to Claim 6, **characterised in that** the ball-shaped head (2) is mounted in a joint housing of a ball joint at the time of pushing it onto the ball-ended pin shaft (1).

8. A process for making a ball-ended pin according to Claim 6 or 7, **characterised in that** when the ball-ended pin shaft (1) is pushed into a through opening in the ball-shaped head (2), at the other end of the through opening lubricant (5) located in the interior of the synthetic ball-shaped head (2) is pressed out of the other end of the through opening.

## Revendications

1. Axe de rotule en deux parties pour une articulation, comportant un col d'axe de rotule (1) et une tête sphérique (2) montée sur le col d'axe de rotule (1),
**caractérisé en ce qu'**un profil de dents de scie (3a, 3c) est formé dans le sens axial (2) du col (1) de l'axe de rotule, dans une cavité de la tête sphérique (2) et/ou sur le col (1) de l'axe de rotule, profil à l'aide duquel la tête sphérique (2) est verrouillée par enclenchement sur le col d'axe de rotule (1).

2. Axe de rotule selon la revendication 1, **caractérisé en ce qu'**un nez (6) servant de frein de rotation est prévue sur le col (1) de l'axe de rotule ou dans la cavité de la tête sphérique (2).

3. Axe de rotule selon la revendication 1 ou 2, **caractérisé en ce que** la tête sphérique (2) comporte, dans sa cavité, un profil de dents de scie (3a, 3c) complémentaire de celui du col (1) de l'axe de rotule, dans lequel s'enclenche le col (1) de l'axe de rotule.

4. Axe de rotule selon la revendication 3, **caractérisé en ce que** le col (1) de l'axe de rotule ou la tête sphérique (2) comporte, en tant que frein de rotation, un nez (6) aménagé dans le sens axial, et que la tête sphérique (2) ou le col (1) de l'axe de rotule comporte une rainure dans laquelle s'engage le nez (6).

5. Axe de rotule selon l'une des revendications 1 à 4, **caractérisé en ce que** la tête sphérique (2) comporte une ouverture débouchante, à l'extrémité de laquelle le col (1) de l'axe de rotule pénètre dans la tête sphérique (2), l'espace (5) compris entre le col (1) de l'axe de rotule et l'autre extrémité de l'ouverture débouchante ménagée dans la tête sphérique (2) contenant du lubrifiant.

6. Procédé de fabrication d'un axe de rotule pour une articulation, **caractérisé en ce qu'**une tête sphérique (2) est emmanchée sur un col (1) de l'axe de rotule, un profil de dents de scie (3a, 3c) étant aménagé, dans le sens axial du col d'axe de rotule (1), dans la cavité de la tête sphérique (2) et/ou sur le col (1) de l'axe de rotule, profil au moyen duquel la tête sphérique (2) forme une union par enclenchement avec le col (1) de l'axe de rotule.

7. Procédé de fabrication d'un axe de rotule selon la revendication 6, **caractérisé en ce que** la tête sphérique (2) est montée dans un boîtier d'articulation d'une articulation à rotule lorsque la tête est emmanchée sur le col d'axe de rotule (1).

8. Procédé de fabrication d'un axe de rotule selon la revendication 6 ou 7, **caractérisé en ce que**, pendant l'emmanchement du col (1) de l'axe de rotule dans une ouverture débouchante de la tête sphérique (2), depuis une extrémité de celle-ci, le col d'axe de rotule chasse du lubrifiant (5), qui se trouve à l'intérieur de la tête sphérique (2) en matière plastique, de l'autre l'extrémité de l'ouverture débouchante.
